(19) Europäisches Patentamt
European Patent Office
Office européen des brevets

(11) EP 0 746 825 B1

(12) EUROPEAN PATENT SPECIFICATION

(45) Date of publication and mention of the grant of the patent:
**26.02.2003 Bulletin 2003/09**

(21) Application number: **93908312.7**

(22) Date of filing: **04.03.1993**

(51) Int Cl.7: **G06K 9/00**, G06K 9/46, G06K 9/36, G06K 9/66

(86) International application number:
**PCT/US93/02234**

(87) International publication number:
**WO 94/020926 (15.09.1994 Gazette 1994/21)**

# (54) HIGH PRECISION ON-LINE DYNAMIC SIGNATURE VERIFICATION SYSTEM

DYNAMISCHES HOCHPRÄZISIONS-ON-LINE-UNTERSCHRIFTPRÜFUNGSSYSTEM

SYSTEME DE VERIFICATION DYNAMIQUE DE SIGNATURES, EN LIGNE, DE HAUTE PRECISION

(84) Designated Contracting States:
**DE ES FR GB IT SE**

(43) Date of publication of application:
**11.12.1996 Bulletin 1996/50**

(73) Proprietors:
- **LANDAU, Alexander**
  **Boulder, CO 80302 (US)**
- **SHRAIRMAN, Ruth, Dr.**
  **Boulder, CO 80303 (US)**

(72) Inventors:
- **LANDAU, Alexander**
  **Boulder, CO 80302 (US)**
- **SHRAIRMAN, Ruth, Dr.**
  **Boulder, CO 80303 (US)**

(74) Representative: **Jones, Alan John et al**
**CARPMAELS & RANSFORD**
**43 Bloomsbury Square**
**London, WC1A 2RA (GB)**

(56) References cited:
**US-A- 3 983 535** **US-A- 5 040 222**

- **IEEE TRANS. ON SYSTEMS, MAN, AND CYBERNETICS, vol. smc-9, no. 1, January 1979, pages 35-38, XP002011949 C. N. LIU, N. M. HERBST ET N. J. ANTHONY: "Automatic signature verification: system description and field test result"**
- **PROC. OF THE 6TH INT. CONF. ON PATTERN RECOGNITION, 19 October 1982, MUNICH, DE, pages 823-826, XP002011950 Y. SATO ET K. KOGURE: "Online signature verification based on shape, motion, and writing pressure"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 746 825 B1

## Description

### a.) Technical Field

This invention relates to an automated on-line hand written data verification system, for example for high accuracy signature verification, based on scriber movement and data analysis using digital data comparison. More particularly, it relates to an verification system using hand written data, and which takes into account evaluation of the maximum value of cross-correlation function between to-be-verified and reference signature signals, as well as analysis of phase histograms related to such signals.

### b.) Background Art

The dictionary defines a signature as the name of a person written with his own hand. It is the oldest means used by people to signify authenticity, and still remains the primary means of authorization approval and authentication. The current electronic environment of computer networks, facsimile machines, and on-line data bases, coupled with the movement towards a moneyless, paperless, faceless society requires new and innovative ways to guarantee the authenticity and validity of money and document transactions. One way to protect information is encryption which provides a certain amount of security. Modern encryption systems use a pair of encryption keys, a public encryption key and private secret decryption key. However, should the private decryption key of an individual be learned by an unauthorized person, the system loses its security.

In the art, two basic approaches to signature verification process are known, the "method of templets" and the "correlation analysis method."

The method of templets uses a set of chosen features values represented together with their tolerance levels and with corresponding weight coefficients. The features that represent the signature of a person usually exploit such characteristics as the average number of peaks, the position of the highest peak, the number of cross-overs at the zero reference, and the like, that is an image of the average signature dynamics as it is used in the pattern recognition approach. Since the signature of a person is a highly variable, it is very hard to find its invariant. This fact results in a reliability problem when using the method of templets for verification.

The correlation analysis method is more appropriate to the nature of the problem of comparison of signature dynamic signals. However, the correlation analysis method runs into difficulties because of the short length of the signals and the non-stationary character of the signals. Application of the correlation analysis method for signature verification is the substance of Herbst, et al. U.S. Patents 3,983,535 and 4,128, 829; and Gundersen U.S. Patent 4,736,445, all of IBM. Each of these patents uses the regional correlation approach, in order to eliminate "distortions of signals in the time axis", for example, see Gundersen U.S. Patent 4,736,445, at Col. 1, lines 52-54. The method of the signal segmentation for cross-correlation analysis was first introduced by Herbst, et al. U.S. Patent 3,983,535, and was modified and supplemented by elements of spectrum analysis by Gundersen U.S. Patent 4,736,445. In the latter references, the evaluation of cross-correlation functions are done between small segments of corresponding to-be-verified and reference signature signals.

The segmentation in its last modification by Gundersen is implemented by dividing the time signal segments between scriber lifts into short subsegments, each subsegment being at most 0.7 second in length, with the cross-correlation function being evaluated between preassigned pairs of subsegments of a to-be-verified and of a reference signature signals. Similarity of the signals is measured by integral characteristics evaluated by using maximum correlation coefficients for all of the subsegment pairs, with special weight functions being used for penalizing any abnormal correlations within the very small overlapped areas.

Such a segmentation method has serious shortcomings. Splitting signals into segments of very short length results in the considerable loss of useful authentic information. Computation of correlation functions on such short overlapping pieces of these subsegments can not result in reliable evaluation and makes this measure statistically unstable. Furthermore, the subdivision of segments into very short subsegments does not eliminate time distortions as it does not necessary result in generation of phase-coincidental pairs of subsegments from the reference signature and from the to-be-verified signature signals.

C. N. Liu, N. M. Herbst, and N. J. Anthony in their article: 'Automatic signature verification: system description and field test result', published in the IEEE Trans. on Systems, Man, and Cybernetics, vol. 9, no. 1, 1979, pp. 35-38, present a further development of the regional correlation analysis with segmentation. The article reveals a method, which penalizes the exceedingly high correlation for extreme "shifts" in the process of evaluation of correlation function between corresponding, heuristically predetermined segments of two signatures, where the term "shift" is used for a lag time parameter in the correlation function computation. This prior art approach has the same basic flaws of splitting the signal into small segments, as those of Herbst, et al. U.S. Patents 3,983,535 and 4,128, 829; and Gundersen U. S. Patent 4,736,445, which were discussed above. Consequently, the accuracy of the regional correlation function analysis is compromised.

Y. Sato and K. Kogure in their article: 'Online signature verification based on shape, motion, and writing pressure' published in Proc. of the $6^{th}$ Int. Conf. On Pattern Recognition, October 1982, Munich, DE, pp. 823-826, exercises another approach. The authors consider a signature as a composition of some gross features, e.g. shape, writing motion, duration time, writing pressure, and other features. Three principal features mostly used in the analysis are shape, motion, and writing pressure. The authors applied the concepts used in the pattern recognition technique, in combination with the difference measure of writing motion derived from the Dynamic Programming matching technique. As a result, they construct the averaged warping function, which describes a diagonal line, and the deviation from this diagonal line is considered as a difference measure of the writing motion. Being based on analysis of spatial averaged waveforms of the coordinate function, this prior art does not promise high accuracy signature verification.

DISCLOSURE OF THE INVENTION

The present invention discloses a method and apparatus, as claimed in the appendent claims, for use in online hand written data verification, such as a signature, based on the comparison of the dynamics of a to-be-verified (sample) signature and of a reference signature by use of a new method for the implementation of the correlation function analysis. In the practice of the present invention, the dynamic data concerning forces, accelerations, velocities and the like, of a scriber, such as a pen, during the process of reference signature making is first recorded and converted to digital form. This dynamic data can then be used as random signal vectors during the verification process, as taught herein below. Prior to the correlation function analysis for evaluating signals matching, both the reference dynamic data and the to-be-verified dynamic data signals are pre-processed to eliminate different kinds of time distortions, so that the signals can be compared as though both sets of data were stationary signals. More particularly, the compared signals are reduced to the same time scale or to the same average velocity and by this to adjust a frequency coincidence between the signals. In order to eliminate phase shifts, a special "sliding window", method, has been developed, as detailed below, which can be used to establish the mapping between phase coincident points of the reference and of the to-be-verified signals.

Additionally, the sliding window method allows to determine a portion of first order differences of window shifts for each axis and differences of such shifts for any compared pair of axes which values are in the zero neighborhood which determination is appeared to be two powerful criteria to distinguish authentic and forged signatures.

Then cross-correlation function analysis is applied to the pair of indivisible apparently stationary, frequency and phase coincident signals. Such analysis may be implemented either for each vector component of written data signal separately, or for multidimensional signal. In the former implementation, the maximum of cross-correlation function evaluated for each vector component is used to determine and measure similarity. In the latter, using multidimensional vectors, a norm or a trace of the cross-correlation matrix is used to determine and measure similarity.

The resulting measure of similarity as determined by either such method of cross-correlation analysis, is then compared with a threshold that has been selected to determine acceptance or rejection of the signature; this criterion will be referred to as $Cr_1$. As more precisely set forth below, verification criteria are calculated by evaluating complex criteria with regard for phase shift histograms and estimation of maximum value of cross-correlation function between to-be-verified and reference signals which both have been pre-processed to a corresponding pair of effectively stationary signals with frequency and phase adjustment. Phase shift analysis and correlation function analysis can be implemented either sequentially or in parallel.

The method and the apparatus of the present invention can be applied for signature authentication in a wide variety of applications, such as security for physical access, computer network access, facsimile legalization, smart card industry, and many others.

These and other objects of the present invention will become apparent to those skilled in the art from the following detailed description, showing the contemplated invention as herein described, and more particularly defined by the appended claims, it being understood that changes in the precise embodiments of the herein disclosed invention are meant to be included as coming within the scope of the claims, except insofar as they may be precluded by the prior art.

## BRIEF DESCRIPTION OF DRAWINGS

The accompanying drawings illustrate complete preferred embodiments of the present invention according to the best modes presently devised for the practical application of the principles thereof, and in which:

FIG. 1 is a schematic diagram showing the elements of the signature verification system of the present invention;
FIG. 2 shows a pictorial representation of two samples of an authentic signature, 22 and 23 which have been written by the same person at two different times;

FIG. 3 shows a pictorial representation of an authentic signature, 31 as in FIG. 2, and of free hand forgery 32 of that signature which has been written by another person;

FIG. 4 shows the magnitude of acceleration during the process of scriber movement 41 and 42 for the two authentic signatures in FIG. 2;

FIG. 5 shows magnitude of acceleration during the process of scriber movement, 51 and 52 respectively, for the authentic signature 31 and for the forged signature 32, shown in FIG. 3;

FIGS. 6a and 6b show graphs of the sliding window shift for the magnitude of acceleration with respect to the window number given for the pair of authentic signature signals in FIG.4, and for the pair of a true and forged signature signals in FIG. 5, respectively;

FIG. 6c shows the sliding window shift for both cases in the same scale along the shift axis;

FIGS. 7a and 7b show histograms of the first order difference, $\Delta\tau_{max}$ for the pair of authentic signatures shown in FIG. 4, and for the pair of the true signature and the free hand forgery in FIG. 5, respectively;

FIGS. 8a and 8b show window shift difference between components X and Y of acceleration with respect to the window number for the pair of authentic signatures in FIG. 2, and for the pair of the authentic and forged signatures in FIG. 3, respectively;

FIG. 8c shows shift difference for both cases in the same scale along the shift axis;

FIGS. 9a and 9b show histograms of the shift difference $[\Delta\tau^{xy}]_{max}$ between window shifts determined for X and Y components of scriber acceleration for the pair of authentic signatures shown in FIG. 2, and for the pair of the authentic and the forged signatures in FIG. 3, respectively;

FIG. 10 shows behavioral matching of the phase shifts 61 given in FIG. 6a, and maximum values of window cross-correlation function 91 with respect to the window number for the authentic signatures in FIG. 2.

## BEST MODE FOR CARRYING OUT THE INVENTION AND INDUSTRIAL APPLICABILITY

The present invention proposes a method by which a digitized code of the signal picked up in the process of signature making can be considered as a personnel key which is both unique and cannot be lost or forgotten. As used herein, a "signature" shall mean any specific hand written text, or hieroglyph, or the like.

As it is shown in FIG. 1, in the process of signature making, or writing other data, a scriber 11 with enclosed sensors, not shown, produces analog signals, which are amplified by amplifier 12 and converted to digital signals by converter 13. The digital signals then go to processor 15 where, if they are original reference signals they are pre-processed and stored in the reference file 17. If the digital signals are from a to-be-verified sample signature they are compared with reference signature signals stored in reference file 17 by use of a verification code 14, as set forth in detail below. The result of the verification comparison is displayed on a verification display 16, and informs the writer or the person administering the test that either access is granted (in the case of positive verification), or request the writer to provide another signature (in the case of negative verification). In the practice of the present invention, no pictorial representation is needed, thereby avoiding even the basis for a forgery attempt of the signature.

The signal that represents the information of the signature making is a time multivariable function of the force transmitted from the hand to the scriber and, in practice, is provided by sensors of pressure and acceleration or velocity along coordinate axes. It has been noted that the signals of the signatures of the same person appear to vary in time and suffer from time distortions. It is a premise of the present invention that the time distortions of signals must be eliminated prior to correlation function analysis to establish signal matching. This is accomplished by using a number of steps.

First of all, the to-be-compared and reference signatures, or other written data signals, are reduced to the same time scale to achieve the same average velocity of signing. In this case, the compared signals are considered on the same time scale for the scriber-media contact period.

Secondly, the time distortions related to the phase shifts are eliminated by using the "sliding window" method. As detailed herein, so called "sliding window is used to localize time distortions. In order to understand the sliding window" method, and without loss of generality, suppose we take a window of $\Delta t_w$ size on the reference signal, and move that window along the to-be-verified signal for an appropriate interval, usually ± 15% of the window size, computing the cross-correlation function between the window and the corresponding part of the to-be-verified signal called "shadow" until the position of the maximum value of cross-correlation function is found. In the experiments detailed herein, a window of 0.5 sec. equal to 100 points of signal length was used, with a step of 0.05 sec. (10 points) length.

The cross-correlation function $W_j(\tau)$ is defined as follows:

$$W_j(\tau)=1/\sqrt{(D_w*D_s)}*\sum_{j}^{j_w} v_w(t)*v_s(t+\tau),$$

where:

$D_w$ and $D_s$ are dispersions of a window and of its shadow, correspondingly;
$\nu_w(t)$ - value of the reference signal at the moment "t" taken on the current window W;
$\nu_s(t+\tau)$ - value of the to-be-verified signal at the moment "$t+\tau$" taken on the shadow;
$j_w=j+\Delta t_w-1$ , where $\Delta t_w$ is the window size;
$j=1,2,...,n$ , is the window number.

This unique method of sliding window makes it possible to establish the mapping between coincidental regions of the reference signal and of the to-be-verified signal in order to eliminate relative phase shifts between parts of the considered pair of signals.

Thus mapping is used as a procedure to establish correspondence between set of points of a reference signal and its counterpart on the to-be-verified signal with respect to phase distortions.

The mapping is done, for example, as follows. Each difference between shifts of two sequential windows is compensated by cutting out the number of points equal to this difference of the corresponding window or shadow. In the case of increasing shift, the corresponding piece of the signal is ignored on the to-be-verified signal, and in the case of decreasing shift, the corresponding piece of the reference signal is ignored. It is noted that sharp changes in the shift value indicate regions of time distortion.

Now, after compensation of both frequency and phase distortions, the correlation function analysis can be applied to the pair of stationary signals.

The cross-correlation function $\Phi(\tau)$ is evaluated as follows:

$$\Phi(\tau)=1/\sqrt{(D_r*D_s)}*\sum_{0}^{L} v_r(t+t_b)*v_s(t+\tau),$$

where:

$D_r$ and $D_s$ are dispersions of reference and to-be-verified signals, correspondingly;

$\nu_r(t+t_b)$ and $\nu_s(t+\tau)$ are centered reference and to-be-verified signals, correspondingly;

$t_b$ and $t_e$ are the parameters of reference signal vector.

$L=t_e-t_b$ is length of pre-processed reference signal.

Shown in FIG. 2 are two signatures 22 and 23 of the same person. The corresponding signals of these two signatures are shown in FIG. 4. The signals represent magnitudes of the scriber acceleration:

$$\nu(t)=\sqrt{[a_x(t)]^2+[a_y(t)]^2},$$

where
$a_x(t)$ and $a_y(t)$ are accelerations along axis X and Y, respectively.

Elimination of time distortions results in an essential increase of maximum value of cross-correlation function. For the signatures in FIG.4 it increases from 0.69 before elimination up to 0.92 after that. It is one of the premises of the present invention that the elimination of such time distortions provides an essential improvement in the level of verification reliability.

The sliding window technique of the present invention provides a powerful method for signature verification, as well as for forgery detection and rejection. FIGS. 6a and 6b show the shift of sliding window relatively to its shadow as a functions of the window number for the pair of authentic signatures and for the pair of authentic and a corresponding free band forgery.

The oscillating character of the graph in FIG. 6b compared to the flat graph in 6a shows that the signals from the signatures of the authentic person and the forger have absolutely different dynamics. FIG. 6c, where the both graphs 6a, and 6b are plotted in the same shift scale exposes dearly this difference.

This visual perception can be easily formalized by computing a histogram of the first order differences normalized to the window step, which characterizes quantitatively differences of shifts for each pair of adjoined windows as follows:

$$\Delta\tau_{max}=1/\Delta t_{wstep}*[\tau_{max}(j+1)-\tau_{max}(j)],$$

where:

$\tau_{max}(j)$ - shift of window j at which its shadow is found;
$\Delta t_{wstep}$ - window step.

For the pair of authentic signatures of the same signer, the histogram, in FIG. 7a shows that about 90% of all $\Delta\tau_{max}$ concentrate in the very narrow interval, around zero or neighborhood:

$$-3 \leq \Delta\tau \leq +3$$

For the case of the forgery, the histogram shown in FIG. 7b has a relatively spread character with less than 20% of all $\Delta\tau_{max}$ concentrated in the zero neighborhood. It is thus shown that the portion of $\Delta\tau_{max}$ values in the zero neighborhood is a criterion referred to as $Cr_2$, and can be used as a measure for establishing authenticity of a signature or other written material by comparing it with a predetermined threshold value.

Another powerful criterion for forgery detection which is provided by the sliding window technique of the present invention is a measure of conformity between the window phase shifts for the different vector components of the signal pair. That is, the relative window phase shifts should conform with each other for two different vector components of signature signals, say for acceleration along axis X and acceleration along axis Y.

As it is known in the art, the true signature and the forgery, being very similar in pictorial representation, differ significantly in thickness of the signed lines which reflects considerably different dynamics with respect to differences in horizontal and vertical movements in the case of true signature making and forgery making. This information is partially used by experts for visual examination of signature authenticity. The present invention utilizes this dynamic information in full and guarantees by then the reliable examination of signature authenticity. These differences become easily apparent by using the conformity measure between the window phase shifts for different components of the signal vector. In the case of the comparison of two authentic signatures, given for instance accelerations along axes X and Y, the graphs of phase shift differences along axes X and Y mostly coincide, see FIG. 8a while for the pair of authentic and forged signatures, the graph demonstrates essential and chaotic differences, see, FIG. 8b. FIG. 8c shows both graphs in the same scale.

The histogram which is used as a part of verification algorithm represents the distribution of differences of the window shift along axes X and Y:

$$[\Delta\tau^{xy}]_{max}=[\tau^{x}]_{max}-[\tau^{y}]_{max}$$

where:

$[\tau^{x}]_{max}$ is a shift of a window at which its shadow is found for X component of vector;

$[\tau^{y}]_{max}$ is a shift of a window at which its shadow is found for Y component of vector.

Here, the present invention exploits the fact that time distortions identified by the sliding window method should coincide with each other along all the axes the signature signals of the same person a represented, and would be expected to differ significantly in the case of forgery. There is a high rate coincidence, the typical histogram is shown in FIG. 9a, which is again characterized by high density of $[\Delta\tau^{xy}]_{max}$ in the zero neighborhood. In this region, there are about 95% of all the shifts for the pair of authentic signatures. By comparison, for a forgery, there is less than 4% of shift coincidence for the pair of authentic and forged signatures, as shown in FIG.9b.

The histogram for shift differences provides another criterion that referred to as $Cr_3$, which measures the portion of shift differences between any pair of axes in the zero neighborhood, $Cr_3$ is used as another measure for establishing signature authenticity by comparing it with the corresponding threshold value.

Criteria $Cr_2$ and $Cr_3$, which are based on two kinds of shift histograms, and the cross-correlation function criterion applied to the pair of indivisible reference and to-be-verified signature signals pre-processed to a stationary pair with the frequency and the phase coincidence represent two faces of signature verification algorithm.

Analysis of the histograms for $\Delta\tau_{max}$ and for $[\Delta\tau^{xy}]_{max}$ and the cross-correlation function analysis can be implemented sequentially as a system of implications, or in parallel as a conjunction of the conditions, for different applications.

In both cases, whether a parallel or sequential approach is used, signature verification is positive when an assigned combination of the criteria is satisfied. Otherwise verification is negative and authenticity of the signer is rejected.

In addition to use of correlation analysis for single signal components we exploit correlation function determination applied for multidimensional random signals as well.

In this case, cross-correlation function for two random signals with components $x_r(t)$, $y_r(t)$, $z_r(t)$ for reference signature signals, and $x_s(t)$, $y_s(t)$, $z_s(t)$ components for the to-be-verified signature signals is represented by square cross-correlation matrix $K_{rs}$:

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

where $K_{ij}$ is a cross-correlation function evaluated for "i" component of the reference vector and "j" component of the to-be-verified vector, and i = x,y,z ; j = x,y,z.

This functional matrix is reduced to the numerical one by substituting each function by its maximum value. A choice of a norm of the matrix or a trace of the matrix is allowed as a similarity measure to establish authenticity of the signature. The to-be-verified signature is accepted or rejected depending on the similarity measure is over or under the appropriate threshold.

While the invention has been particularly shown, described and illustrated in detail with reference to preferred embodiments and modifications thereof, it should be understood by those skilled in art that the foregoing and other modifications are exemplary only, and that equivalent changes in form and detail may be made therein without departing from the scope of the invention as claimed.

**Claims**

**1.** Apparatus for use in on-line handwritten data verification using the dynamics of the scriber movement while recording a reference and a to-be-verified data signals in accordance with one or more selected threshold values, the apparatus comprising:

a. a scriber;
b. means for gathering a set of reference and to-be-verified analog dynamic signals related to movement of the scriber during the process of reference data making and during a process of to-be-verified data making, such signals being selected from the group consisting of forces transmitted from the hand of the writer to the scriber, scriber acceleration, scriber velocity, and mixtures thereof, each such being measured or calculated as a function of time;
c. means for converting the analog reference and to-be-verified dynamic signals from analog to digital form;
d. means for storing the resulting reference digital signals in a file of reference digital signals;
e. means for providing a data pair composed of the digital data of the to-be-verified signal and the digital data of one of the reference file signals;

f. means for processing the data pair of digital signals to eliminate phase shifts, which are time distortions between them utilizing the steps of:

i. using a sliding window to find the phase shifts, and thereby establishing a mapping between phase coincident areas of the reference digital signal and of the to-be-verified digital signal, wherein each phase shift represents a difference in positioning of the sliding window and its shadow in the time scale, and wherein the sliding window is a piece of one signal which is moved along the signal with a predetermined step of a size which is less than size of the window, and which is used to find for each window the corresponding piece in the other signal of the pair on the basis of the position of the maximum value of a cross-correlation function between windows of one signal and the corresponding pieces of the other signal, called shadows, for determination of phase shift locations;
ii. eliminating the phase shifts between the reference digital signal and the to-be-verified digital signal by the use of the mapping procedure of step f.i.;
iii. differentiating differences in positioning of windows and their shadows along one axis with respect to the counterpart differences along another axis.

g. means for determining the similarity of the pair of reference and to-be-verified data using criterion Cr.1 only, or combined with Cr.2 or Cr.3, or with both.
wherein $Cr_1$ is determined by:

i. evaluating the cross-correlation matrix $K_{rs}$ based on data from step f.ii., with each element representing the maximum value of the corresponding cross-correlation function for each pair of x, y and z components of digital signal vectors;

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. producing a measure from the matrix, said measure being produced using a method selected from a method of calculating a norm of the matrix and a method of calculating a trace of the matrix;
iii. comparing the measure as determined in previous step ii., with an appropriate threshold in order to produce a non-rejection or rejection signal of the authenticity of the to-be-verified data, as the criterion $Cr_1$;

wherein $Cr_2$ is determined by:

i. determining distribution of phase shifts for windows by constructing a histogram of the first order shift differences between positions of windows and their shadows obtained from the application of the sliding window method in step f.i.;
ii. utilizing the information of said first order shift differences histogram to produce a measure which characterizes the portion of the first order shift differences in the zero neighborhood;
iii. comparing the measure determined in previous step ii. with an appropriate threshold in order to produce a signal of non-rejection or rejection of authenticity of the to-be-verified data as the criterion $Cr_2$;

wherein $Cr_3$ is determined by:

i. determining coincidence of phase shifts for two different components of the data signal vectors pairs chosen from X, Y and Z by constructing a histogram of the shift differences obtained from the application of sliding window means in step f.iii;
ii. utilizing the information of said shift differences histogram to produce a measure which characterizes the portion of the shift differences for the two considered vector components of the data signal which values are in the zero neighborhood;
iii. comparing the measure determined in previous step ii. with an appropriate threshold in order to produce a signal of non-rejection or rejection of authenticity of the to-be-verified data as the criterion $Cr_3$; and

h. means for using the determination of similarity from g., to produce a signal of approval or rejection of the authenticity of the to-be-verified data.

**2.** A machine method of on-line handwritten data verification using the dynamics of scriber movement while recording a reference data and a to-be-verified data in accordance with one or more selected threshold value, including the steps of:

a. gathering a set of analog dynamic reference signals related to movement of the scriber for producing handwritten reference data during the process of reference data making, such signals being selected from the group consisting of forces transmitted from the hand of the writer to the scriber, scriber acceleration, scriber velocity, and mixtures thereof, all said signals being measured or calculated as functions of time;
b. converting the reference analog dynamic signals from analog to digital form, and storing the resulting reference digital signals in a file of reference digital signals for retrieval therefrom;
c. gathering a set of to-be-verified analog dynamic data signals related to movement of said scriber during the process of to-be-verified data making, such signals to be selected from the group consisting of forces transmitted from the hand of the writer to the scriber, scriber acceleration, scriber velocity, and mixtures thereof, all said signals being measured or calculated as functions of time;
d. converting the to-be-verified analog dynamic data signals to digital form;
e. providing a pair of digital signals, said digital signal pair being composed of the to-be-verified digital signal and one of the reference digital signals taken from the reference signal file;
f. processing the pair of digital signals to eliminate time distortions between them utilizing the steps of:

i. using a sliding window to find the phase shifts, and thereby establishing a mapping between phase coincident areas of the reference digital signal and of the to-be-verified digital signal, wherein the phase shifts represent a difference in positioning of the sliding window and its shadow in the time scale, and wherein the sliding window is a piece of one signal which is moved along the signal with a predetermined step of a size which is less than size of the window, and which is used to find for each window the corresponding piece in the other signal of the pair on the basis of the position of the maximum value of a cross-correlation function between windows of one signal and the corresponding pieces of the other signal, called shadows, for determination of phase shift locations;
ii. eliminating the phase shifts between the reference digital signal and the to-be-verified digital signal by the use of the mapping procedure of step f.i.;
iii. differentiating differences in positioning of windows and their shadows along one axis with respect to the counterpart differences along another axis.

g. determining the similarity of the pair of reference and to-be-verified data using criterion Cr.1 only, or combined with Cr.2 or Cr.3, or with both,
wherein $Cr_1$ is determined by:

i. evaluating the cross-correlation matrix $K_{rs}$ based on data from step f. ii., with each element representing the maximum value of the corresponding cross-correlation function for each pair of x, y and z components of digital signal vectors:

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. producing a measure from the matrix, said measure being produced using a method selected from a method of calculating a norm of the matrix and [the] a method of calculating a trace of the matrix;
iii. comparing the measure as determined by previous step ii. with an appropriate threshold in order to produce a signal of non-rejection or rejection of the authenticity of the to-be-verified data, as the criterion $Cr_1$;

wherein $Cr_2$ is determined by:

i. determining distribution of phase shifts for windows by constructing a histogram of the first order shift differences between positions of windows and their shadows obtained from the application of the sliding window method in step f.i.;
ii. utilizing the information of said first order shift differences histogram to produce a measure which characterizes the portion of the first order shift differences in the predefined zero neighborhood;
iii. using the measure determined in previous step ii and comparing it with an appropriate threshold in order to produce a signal of non-rejection or rejection of authenticity of the to-be-verified data, as the criterion $Cr_2$;

wherein $Cr_3$ is determined by:

i. determining coincidence of phase shifts for pairs of the different components of the data signal vectors: X, Y and Z by constructing a histogram of the shift differences obtained from the application of the sliding window method in step f.iii;
ii. utilizing the information of said shift differences histogram to produce a measure which characterizes the portion of the shift differences in the predefined zero neighborhood;
iii. comparing the measure determined in previous step ii. with an appropriate threshold in order to produce a signal of non-rejection or rejection of authenticity of the to-be-verified data as the criterion $Cr_3$; and then

h. using the determination of similarity from g., to produce a signal of approval or rejection of the authenticity of the to-be-verified data.

**3.** The method of claim 2 wherein the correlation analysis utilizes a sub-matrix in step g.i. of criterion $Cr_1$.

**4.** The method of claim 2 wherein the information in said matrix is utilized in step g.ii. of criterion $Cr_1$ to determine a trace of the matrix.

**5.** The method of claim 2 wherein the information in said matrix is utilized in step g.ii. of criterion $Cr_1$ to determine a norm of the matrix.

**6.** The method of claim 2 wherein determination of the similarity of data is based on evaluation of cross-correlation function for a selected component of the data signals.

**7.** The method of claim 6 wherein correlation analysis is utilized by evaluating cross-correlation function for the magnitude of the selected components of the data signals.

**8.** The method of claim 2 wherein the verification result of step g. is computed by determining the conjunction of measures $Cr_1$, $Cr_2$ and $Cr_3$.

**Patentansprüche**

**1.** Vorrichtung zur Verwendung bei der Online-Überprüfung von handgeschriebenen Daten unter Verwendung der dynamischen Eigenschaften der Bewegung eines Schreibers bzw. Schreibgeräts, während Referenz- und zu verifizierende bzw. zu überprüfende Datensignale in Übereinstimmung mit einem oder mehreren ausgewählten Schwellwerten aufgezeichnet werden, wobei die Vorrichtung umfaßt:

a. einen Schreiber bzw. ein Schreibgerät;
b. Mittel bzw. Einrichtungen zum Sammeln eines Satzes von Referenz- bzw. Bezugssignalen und zu verifizierenden, analogen, dynamischen Signalen, welche sich auf die Bewegung des Schreibgeräts beziehen, während des Vorgangs einer Herstellung von Referenzdaten und während eines Vorgangs einer Herstellung von zu verifizierenden Daten, wobei derartige Signale aus der Gruppe, bestehend aus Kräften, welche von der Hand des Schreibenden auf das Schreibgerät übertragen werden, der Schreibgerätbeschleunigung, der Schreibgerätgeschwindigkeit, und Mischungen davon, ausgewählt sind, welche jeweils als eine Funktion der Zeit gemessen oder berechnet werden;
c. Mittel bzw. Einrichtungen zum Konvertieren bzw. Umwandeln der analogen Referenz- und zu verifizierenden, dynamischen Signale von einer analogen in eine digitale Form;
d. Mittel bzw. Einrichtungen zum Speichern der resultierenden, digitalen Referenzsignale in einem File von digitalen Referenzsignalen;

e. Mittel bzw. Einrichtungen zum Bereitstellen eines Datenpaars, welches aus den digitalen Daten des zu verifizierenden bzw. zu überprüfenden Signals und den digitalen Daten von einem der Referenzfilesignale zusammengesetzt ist;

f. Mittel bzw. Einrichtungen zum Bearbeiten bzw. Verarbeiten des Datenpaars von digitalen Signalen, um Phasenverschiebungen zu eliminieren, welche Zeitverzerrungen zwischen diesen sind, unter Verwendung der Schritte:

i. Verwenden eines gleitenden Fensters, um die Phasenverschiebungen herauszufinden, und dadurch Aufbauen einer Darstellung bzw. Abbildung zwischen Bereichen bzw. Flächen übereinstimmender Phase des digitalen Referenzsignals und des zu überprüfenden, digitalen Signals, worin jede Phasenverschiebung eine Differenz in einer Positionierung des gleitenden Fensters und seines Schattens in der Zeitskala repräsentiert, und worin das gleitende Fenster ein Stück eines Signals ist, welches entlang des Signals mit einem vorbestimmten Schritt einer Größe bewegt wird, welche geringer ist als die Größe des Fensters, und welches verwendet wird, um für jedes Fenster das entsprechende Stück in dem anderen Signal des Paars auf der Basis der Position des maximalen Werts einer Kreuzkorrelationsfunktion zwischen Fenstern von einem Signal und den entsprechenden Stücken des anderen Signals, sogenannten Schatten, für eine Bestimmung von Phasenverschiebungsstellen zu finden;

ii. Eliminieren der Phasenverschiebungen zwischen dem digitalen Referenzsignal und dem digitalen, zu überprüfenden bzw. zu verifizierenden Signal unter Verwendung des Darstellungsvorgangs von Schritt f.i.;

iii. Unterscheiden bzw. Differenzieren von Unterschieden beim Positionieren von Fenstern und ihrer Schatten entlang einer Achse in bezug auf die Unterschiede eines Gegenstücks entlang einer anderen Achse;

g. Mittel bzw. Einrichtungen zum Bestimmen der Ähnlichkeit des Paars von Referenz- und zu verifizierenden Daten unter Verwendung von Kriterium Cr.1 allein oder kombiniert mit Cr.2 oder Cr.3 oder mit beiden,

worin $Cr_1$ bestimmt wird durch:

i. Evaluieren der Kreuzkorrelationsmatrix $K_{rs}$ basierend auf Daten von Schritt f.ii., wobei jedes Element den maximalen Wert der entsprechenden Kreuzkorrelationsfunktion für jedes Paar von x-, y- und z-Komponenten von digitalen Signalvektoren darstellt;

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. Erzeugen eines Maßes bzw. einer Größe aus der Matrix, wobei das Maß unter Verwendung einer Methode erzeugt wird, welche aus einer Methode eines Berechnens einer Norm der Matrix und einer Methode eines Berechnens einer Spur der Matrix ausgewählt ist;

iii. Vergleichen des Maßes, wie es in dem vorangehenden Schritt ii. bestimmt wurde, mit einem geeigneten Schwellwert, um ein Nichtzurückweisungs- oder Zurückweisungssignal der Authentizität der zu verifizierenden Daten zu erzeugen, und zwar als das Kriterium $Cr_1$;

worin $Cr_2$ bestimmt wird durch:

i. Bestimmen einer Verteilung von Phasenverschiebungen für Fenster durch Konstruieren eines Histogramms der Verschiebungsdifferenzen erster Ordnung zwischen Positionen von Fenstern und ihrer Schatten, welche aus der Anwendung der Methode des gleitenden Fensters in Schritt f.i. erhalten werden;

ii. Verwenden der Information des Histogramms der Verschiebungsdifferenzen erster Ordnung, um ein Maß bzw. eine Größe zu erzeugen, welche(s) den Abschnitt bzw. Bereich der Verschiebungsdifferenzen erster Ordnung in der Null-Nachbarschaft charakterisiert;

iii. Vergleichen des Maßes bzw. der Größe, welche(s) in dem vorangehenden Schritt ii. bestimmt wurde, mit einem geeigneten Schwellwert, um ein Signal einer Nichtzurückweisung oder Zurückweisung der Authentizität der zu verifizierenden Daten zu erzeugen, und zwar als das Kriterium $Cr_2$;

worin $Cr_3$ bestimmt wird durch:

i. Bestimmen einer Koinzidenz von Phasenverschiebungen für zwei unterschiedliche Komponenten der Datensignal-Vektorenpaare, welche aus X, Y und Z gewählt sind, durch Konstruieren eines Histogramms der Phasenverschiebungen, welche aus der Anwendung der Mittel des gleitenden Fensters in Schritt f. iii. erhalten wurden;
ii. Verwenden der Information des Histogramms der Phasenverschiebungen, um eine Größe zu erzeugen, welche den Abschnitt der Verschiebungsdifferenzen für die zwei betrachteten Vektorkomponenten des Datensignals charakterisiert, welche Werte sich in der Null-Nachbarschaft befinden;
iii. Vergleichen der Größe, welche in dem vorangehenden Schritt ii. bestimmt wurde, mit einem geeigneten Schwellwert, um ein Signal einer Nichtzurückweisung oder Zurückweisung der Authentizität der zu verifizierenden Daten zu erzeugen, und zwar als das Kriterium $Cr_3$;

h. Mittel bzw. Einrichtungen zum Verwenden der Bestimmung einer Ähnlichkeit von g., um ein Signal einer Zustimmung oder eines Verwerfens der Authentizität der zu verifizierenden Daten zu erzeugen.

**2.** Maschinenverfahren zur Online-Verifikation von handgeschriebenen Daten unter Verwendung der dynamischen Eigenschaften der Bewegung eines Schreibgeräts, während Referenzdaten und zu verifizierende bzw. zu überprüfende Daten in Übereinstimmung mit einem oder mehreren ausgewählten Schwellwert aufgezeichnet werden, beinhaltend die Schritte:

a. Sammeln eines Satzes von analogen, dynamischen Referenz- bzw. Bezugssignalen, welche sich auf die Bewegung des Schreibgeräts bzw. Schreibers zur Erzeugung von handgeschriebenen Referenzdaten während des Vorgangs einer Erzeugung von Referenzdaten beziehen, wobei derartige Signale aus der Gruppe, bestehend aus Kräften, welche von der Hand des Schreibenden auf das Schreibgerät übertragen werden, der Schreibgerätbeschleunigung, der Schreibgerätgeschwindigkeit, und Mischungen davon, ausgewählt werden, wobei alle Signale als Funktionen der Zeit gemessen oder berechnet werden;
b. Konvertieren der analogen, dynamischen Referenzsignale von einer analogen in eine digitale Form und Speichern der resultierenden, digitalen Referenzsignale in einem File von digitalen Referenzsignalen für eine Entnahme davon;
c. Sammeln eines Satzes von zu überprüfenden, analogen, dynamischen Datensignalen, welche sich auf eine Bewegung des Schreibgeräts beziehen, während des Vorgangs einer Herstellung von zu verifizierenden Daten, wobei diese Daten aus der Gruppe, bestehend aus Kräften, welche von der Hand des Schreibenden auf das Schreibgerät übertragen werden, der Schreibgerätbeschleunigung, der Schreibgerätgeschwindigkeit, und Mischungen davon, ausgewählt werden, wobei alle diese Signale als Funktionen der Zeit gemessen oder berechnet werden;
d. Umwandeln der zu verifizierenden, analogen, dynamischen Datensignale in digitale Form;
e. Bereitstellen eines Paars von digitalen Signalen, wobei das digitale Signalpaar aus dem zu überprüfenden, digitalen Signal und einem der digitalen Referenzsignale zusammengesetzt wird, welche von dem Referenzsignalfile entnommen werden;
f. Bearbeiten bzw. Verarbeiten des Paars von digitalen Signalen, um Zeitverzerrungen zwischen diesen zu eliminieren, unter Verwendung der Schritte:

i. Verwenden eines gleitenden Fensters, um die Phasenverschiebungen herauszufinden und dadurch Aufbauen einer Darstellung bzw. Abbildung zwischen Bereichen bzw. Flächen übereinstimmender Phase des digitalen Referenzsignals und des zu überprüfenden, digitalen Signals, worin die Phasenverschiebungen eine Differenz in einer Positionierung des gleitenden Fensters und seines Schattens in der Zeitskala repräsentieren, und worin das gleitende Fenster ein Stück eines Signals ist, welches entlang des Signals mit einem vorbestimmten Schritt einer Größe bewegt wird, welche geringer ist als die Größe des Fensters, und welches verwendet wird, um für jedes Fenster das entsprechende Stück in dem anderen Signal des Paars auf der Basis der Position des maximalen Werts einer Kreuzkorrelationsfunktion zwischen Fenstern von einem Signal und den entsprechenden Stücken des anderen Signals, sogenannten Schatten, für eine Bestimmung von Phasenverschiebungsstellen zu finden;
ii. Eliminieren der Phasenverschiebungen zwischen dem digitalen Referenzsignal und dem digitalen, zu überprüfenden bzw. zu verifizierenden Signal unter Verwendung des Darstellungsvorgangs von Schritt f.i.;
iii. Unterscheiden bzw. Differenzieren von Unterschieden beim Positionieren von Fenstern und ihrer Schatten entlang einer Achse in bezug auf die Unterschiede eines Gegenstücks entlang einer anderen Achse;

g. Bestimmen der Ähnlichkeit des Paars von Referenz- und zu verifizierenden Daten unter Verwendung von Kriterium Cr.1 allein oder kombiniert mit Cr.2 oder Cr.3 oder mit beiden,

worin $Cr_1$ bestimmt wird durch:

i. Evaluieren der Kreuzkorrelationsmatrix $K_{rs}$ basierend auf Daten von Schritt f.ii., wobei jedes Element den maximalen Wert der entsprechenden Kreuzkorrelationsfunktion für jedes Paar von x-, y- und z-Komponenten von digitalen Signalvektoren darstellt;

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. Erzeugen eines Maßes bzw. einer Größe aus der Matrix, wobei das Maß unter Verwendung einer Methode erzeugt wird, welche aus einer Methode eines Berechnens einer Norm der Matrix und einer Methode eines Berechnens einer Spur der Matrix ausgewählt ist;

iii. Vergleichen des Maßes, wie es in dem vorangehenden Schritt ii. bestimmt wurde, mit einem geeigneten Schwellwert, um ein Signal einer Nichtzurückweisung oder Zurückweisung der Authentizität der zu verifizierenden Daten zu erzeugen, und zwar als das Kriterium $Cr_1$;

worin $Cr_2$ bestimmt wird durch:

i. Bestimmen einer Verteilung von Phasenverschiebungen für Fenster durch Konstruieren eines Histogramms der Verschiebungsdifferenzen erster Ordnung zwischen Positionen von Fenstern und ihrer Schatten, welche aus der Anwendung der Methode des gleitenden Fensters in Schritt f.i. erhalten werden;
ii. Verwenden der Information des Histogramms der Verschiebungsdifferenzen erster Ordnung, um ein Maß bzw. eine Größe zu erzeugen, welche(s) den Abschnitt bzw. Bereich der Verschiebungsdifferenzen erster Ordnung in der vordefinierten Null-Nachbarschaft charakterisiert;
iii. Vergleichen des Maßes bzw. der Größe, welche(s) in dem vorangehenden Schritt ii. bestimmt wurde, mit einem geeigneten Schwellwert, um ein Signal einer Nichtzurückweisung oder Zurückweisung der Authentizität der zu verifizierenden Daten zu erzeugen, und zwar als das Kriterium $Cr_2$;

worin $Cr_3$ bestimmt wird durch:

i. Bestimmen einer Koinzidenz von Phasenverschiebungen für Paare der unterschiedlichen Komponenten der Datensignal-Vektorenpaare: X, Y und Z, durch Konstruieren eines Histogramms der Phasenverschiebungen, welche aus der Anwendung der Methode des gleitenden Fensters in Schritt f.iii. erhalten wurden;
ii. Verwenden der Information des Histogramms der Phasenverschiebungen, um eine Größe zu erzeugen, welche den Abschnitt der Verschiebungsdifferenzen in der vordefinierten Null-Nachbarschaft charakterisiert;
iii. Vergleichen der Größe, welche in dem vorangehenden Schritt ii. bestimmt wurde, mit einem geeigneten Schwellwert, um ein Signal einer Nichtzurückweisung oder Zurückweisung der Authentizität der zu verifizierenden Daten zu erzeugen, und zwar als das Kriterium $Cr_3$; und dann

h. Verwenden der Bestimmung der Ähnlichkeit aus g., um ein Signal einer Zustimmung oder Verwerfung der Authentizität der zu verifizierenden Daten zu erzeugen.

**3.** Verfahren nach Anspruch 2, worin die Korrelationsanalyse eine Submatrix in Schritt g.i. von Kriterium $Cr_1$ verwendet.

**4.** Verfahren nach Anspruch 2, worin die Information in der Matrix in Schritt g.ii. des Kriteriums $Cr_1$ verwendet wird, um eine Spur der Matrix zu bestimmen.

**5.** Verfahren nach Anspruch 2, worin die Information in der Matrix in Schritt g.ii. des Kriteriums $Cr_1$ verwendet wird, um eine Norm der Matrix zu bestimmen.

**6.** Verfahren nach Anspruch 2, worin eine Bestimmung der Ähnlichkeit von Daten auf einer Evaluierung einer Kreuzkorrelationsfunktion für eine ausgewählte Komponente der Datensignale basiert.

7. Verfahren nach Anspruch 6, worin eine Korrelationsanalyse durch ein Evaluieren einer Kreuzkorrelationsfunktion für die Größe der ausgewählten Komponenten der Datensignale verwendet wird.

8. Verfahren nach Anspruch 2, worin das Überprüfungs- bzw. Verifizierungsresultat von Schritt g. durch Bestimmen der Konjunktion der Maße bzw. Größen bzw. Kriterien $Cr_1$, $Cr_2$ und $Cr_3$ berechnet wird.

## Revendications

1. Appareil à utiliser dans la vérification en ligne de données écrites à la main, utilisant la dynamique du mouvement d'un traçoir lors de l'enregistrement de signaux de référence et de données à vérifier selon une ou plusieurs valeurs limites choisies, l'appareil comprenant :

   a. un traçoir ;
   b. des moyens destinés à rassembler un ensemble de signaux de référence et dynamiques analogiques à vérifier liés au mouvement du traçoir lors du processus d'élaboration des données de référence et lors d'un processus d'élaboration des données à vérifier, ces signaux étant choisis dans le groupe consistant en des forces transmises par la main de l'auteur au traçoir, l'accélération du traçoir, la vitesse du traçoir, et des combinaisons de ceux-ci, chacun d'eux étant mesuré ou calculé en fonction du temps ;
   c. des moyens destinés à convertir les signaux de référence analogiques et les signaux dynamiques à vérifier du format analogique au format numérique ;
   d. des moyens pour stocker les signaux numériques de référence résultants dans un fichier de signaux numériques de référence ;
   e. des moyens destinés à fournir une paire de données composées des données numériques du signal à vérifier et des données numériques d'un des signaux du fichier de référence ;
   f. des moyens destinés à traiter la paire de données de signaux numériques afin d'éliminer les décalages de phase, qui sont des distorsions temporelles entre eux, à l'aide des étapes suivantes :

      i. utilisation d'une fenêtre coulissante pour trouver les décalages de phase, et de ce fait établir un mappage entre des zones de phase coïncidentes du signal numérique de référence et du signal numérique à vérifier, dans laquelle chaque décalage de phase représente une différence dans le positionnement de la fenêtre coulissante et de son ombre portée dans l'échelle de temps, et dans laquelle la fenêtre coulissante est un morceau d'un signal qui est déplacé le long du signal avec une étape prédéterminée d'une dimension qui est inférieure à la dimension de la fenêtre, et qui est utilisé pour trouver, pour chaque fenêtre, le morceau correspondant dans l'autre signal de la paire sur la base de la position de la valeur maximale d'une fonction de corrélation croisée entre les fenêtres d'un signal et les morceaux correspondants de l'autre signal, appelés ombres portées, pour la détermination des emplacements des décalages de phase ;
      ii. élimination des décalages de phase entre le signal numérique de référence et le signal numérique à vérifier par l'utilisation de la procédure de mappage de l'étape f.i. ;
      iii. différenciation des différences dans le positionnement des fenêtres et de leurs ombres portées le long d'un axe par rapport aux différences équivalentes le long d'un autre axe.

   g. des moyens destinés à déterminer la similarité de la paire des données de référence et à vérifier à l'aide du critère $Cr_1$ uniquement, ou combiné avec $Cr_2$ ou $Cr_3$, ou les deux.
   dans lequel $Cr_1$ est déterminé par :

      i. l'évaluation de la matrice de corrélation croisée $K_{rs}$ en fonction des données de l'étape f.ii., chaque élément représentant la valeur maximale de la fonction de corrélation croisée correspondante pour chaque paire de composantes x, y et z des vecteurs des signaux numériques ;

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. la production d'une mesure à partir de la matrice, ladite mesure étant produite à l'aide d'une méthode choisie parmi une méthode de calcul d'une norme de la matrice et une méthode de calcul d'un tracé de la matrice ;
iii. la comparaison de la mesure telle que déterminée à l'étape précédente ii. avec un seuil approprié afin de produire un signal de non-rejet ou de rejet de l'authenticité des données à vérifier, défini comme le critère $Cr_1$ ;

dans lequel $Cr_2$ est déterminé par :

i. la détermination de la répartition des décalages de phase pour les fenêtres en élaborant un histogramme des différences de décalage de premier ordre entre les positions des fenêtres et de leurs ombres portées obtenues par l'application de la méthode de la fenêtre coulissante de l'étape f.i. ;
ii. l'utilisation des informations dudit histogramme des différences de décalage de premier ordre pour produire une mesure qui caractérise la portion des différences de décalage de premier ordre au voisinage de zéro ;
iii. la comparaison de la mesure déterminée à l'étape précédente ii. avec un seuil approprié afin de produire un signal de non-rejet ou de rejet de l'authenticité des données à vérifier, défini comme le critère $Cr_2$ ;

dans lequel $Cr_3$ est déterminé par :

i. la détermination de la coïncidence des décalages de phase pour deux composantes différentes des paires de vecteurs des signaux de données choisis parmi X, Y et Z en élaborant un histogramme des différences de décalage obtenues par l'application des moyens de fenêtre coulissante à l'étape f.iii. ;
ii. l'utilisation des informations dudit histogramme des différences de décalage pour produire une mesure qui caractérise la portion des différences de décalage pour les deux composantes de vecteurs considérés du signal de données dont les valeurs sont au voisinage de zéro ;
iii. la comparaison de la mesure déterminée à l'étape précédente ii. avec un seuil approprié afin de produire un signal de non-rejet ou de rejet de l'authenticité des données à vérifier, défini comme le critère $Cr_3$ ; et

h. des moyens pour utiliser la détermination de la similarité de l'étape g. pour produire un signal d'approbation ou de rejet de l'authenticité des données à vérifier.

**2.** Procédé automatique de vérification en ligne des données écrites à la main utilisant la dynamique du mouvement d'un traçoir lors de l'enregistrement d'une donnée de référence et d'une donnée à vérifier selon une ou plusieurs valeurs limites choisies, incluant les étapes suivantes :

a. collecte d'un ensemble de signaux de référence dynamiques analogiques liés au mouvement du traçoir pour produire des données de référence écrites à la main lors du processus d'élaboration des données de référence, ces signaux étant choisis dans le groupe consistant en des forces transmises par la main de l'auteur au traçoir, l'accélération du traçoir, la vitesse du traçoir, et des combinaisons de ceux-ci, tous lesdits signaux étant mesurés ou calculés en fonction du temps ;
b. conversion des signaux dynamiques analogiques de référence du format analogique au format numérique, et stockage des signaux numériques de référence résultants dans un fichier de signaux numériques de référence destiné à leur réutilisation ;
c. collecte d'un ensemble de signaux de données dynamiques analogiques à vérifier liés au mouvement dudit traçoir pendant le processus d'élaboration des données à vérifier, ces signaux à choisir dans le groupe consistant en des forces transmises par la main de l'auteur au traçoir, l'accélération du traçoir, la vitesse du traçoir, et des combinaisons de ceux-ci, tous lesdits signaux étant mesurés ou calculés en fonction du temps ;
d. conversion des signaux de données dynamiques analogiques à vérifier au format numérique ;
e. fourniture d'une paire de signaux numériques, ladite paire de signaux numériques étant composée du signal numérique à vérifier et d'un des signaux numériques de référence pris dans le fichier des signaux de référence ;
f. traitement de la paire de signaux numériques pour éliminer les distorsions temporelles entre eux à l'aide des étapes suivantes :

i. utilisation d'une fenêtre coulissante pour trouver les décalages de phase, et de ce fait établir un mappage entre des zones de phase coïncidentes du signal numérique de référence et du signal numérique à vérifier, dans laquelle les décalages de phase représentent une différence dans le positionnement de la fenêtre coulissante et de son ombre portée dans l'échelle de temps, et dans laquelle la fenêtre coulissante est un morceau d'un signal qui est déplacé le long du signal avec une étape prédéterminée d'une dimension qui est inférieure à la dimension de la fenêtre, et qui est utilisé pour trouver, pour chaque fenêtre, le morceau correspondant dans l'autre signal de la paire sur la base de la position de la valeur maximale d'une fonction de corrélation croisée entre les fenêtres d'un signal et les morceaux correspondants de l'autre signal, appelés ombres portées, pour la détermination des emplacements des décalages de phase ;
ii. élimination des décalages de phase entre le signal numérique de référence et le signal numérique à vérifier par l'utilisation de la procédure de mappage de l'étape f.i. ;
iii. différenciation des différences dans le positionnement des fenêtres et de leurs ombres portées le long d'un axe par rapport aux différences équivalentes le long d'un autre axe.

g. détermination de la similarité de la paire de données de référence et à vérifier à l'aide du critère $Cr_1$ uniquement, ou combiné avec $Cr_2$ ou $Cr_3$, ou les deux,
dans lequel $Cr_1$ est déterminé par :

i. l'évaluation de la matrice de corrélation croisée $K_{rs}$ en fonction des données de l'étape f.ii., chaque élément représentant la valeur maximale de la fonction de corrélation croisée correspondante pour chaque paire de composantes x, y et z des vecteurs des signaux numériques :

$$K_{rs} = \begin{matrix} K_{xx} & K_{xy} & K_{xz} \\ K_{yx} & K_{yy} & K_{yz} \\ K_{zx} & K_{zy} & K_{zz} \end{matrix}$$

ii. la production d'une mesure à partir de la matrice, ladite mesure étant produite à l'aide d'une méthode choisie parmi une méthode de calcul d'une norme de la matrice et [la] une méthode de calcul d'un tracé de la matrice ;

iii. la comparaison de la mesure telle que déterminée à l'étape précédente ii. avec un seuil approprié afin de produire un signal de non-rejet ou de rejet de l'authenticité des données à vérifier, défini comme le critère $Cr_1$ ;

dans lequel $Cr_2$ est déterminé par :

i. la détermination de la répartition des décalages de phase pour les fenêtres en élaborant un histogramme des différences de décalage de premier ordre entre les positions des fenêtres et de leurs ombres portées obtenues par l'application de la méthode de la fenêtre coulissante de l'étape f.i. ;
ii. l'utilisation des informations dudit histogramme des différences de décalage de premier ordre pour produire une mesure qui caractérise la portion des différences de décalage de premier ordre au voisinage de zéro prédéterminé ;
iii. l'utilisation de la mesure déterminée à l'étape précédente ii. et sa comparaison avec un seuil approprié afin de produire un signal de non-rejet ou de rejet de l'authenticité des données à vérifier, défini comme le critère $Cr_2$ ;

dans lequel $Cr_3$ est déterminé par :

i. la détermination de la coïncidence des décalages de phase pour des paires de composantes différentes des vecteurs des signaux numériques : X, Y et Z en élaborant un histogramme des différences de décalage obtenues par l'application du procédé de la fenêtre coulissante à l'étape f.iii. ;
ii. l'utilisation des informations dudit histogramme des différences de décalage pour produire une mesure qui caractérise la portion des différences de décalages au voisinage de zéro prédéterminé ;
iii. la comparaison de la mesure déterminée à l'étape précédente ii. avec un seuil approprié afin de produire un signal de non-rejet ou de rejet de l'authenticité des données à vérifier, défini comme le critère $Cr_3$ ; puis

h. utilisation de la détermination de la similarité de l'étape g. pour produire un signal d'approbation ou de rejet de l'authenticité des données à vérifier.

**3.** Procédé selon la revendication 2, dans lequel l'analyse de corrélation utilise une sous-matrice à l'étape g.i. du critère $Cr_1$.

**4.** Procédé selon la revendication 2, dans lequel les informations contenues dans ladite matrice sont utilisées à l'étape g.ii. du critère $Cr_1$ pour déterminer un tracé de la matrice.

**5.** Procédé selon la revendication 2, dans lequel les informations contenues dans ladite matrice sont utilisées à l'étape g.ii. du critère $Cr_1$ pour déterminer une norme de la matrice.

**6.** Procédé selon la revendication 2, dans lequel la détermination de la similarité des données s'appuie sur l'évaluation d'une fonction de corrélation croisée pour une composante choisie des signaux de données.

**7.** Procédé selon la revendication 6, dans lequel l'analyse de corrélation est utilisée en évaluant une fonction de corrélation croisée pour l'amplitude des composantes choisies des signaux de données.

**8.** Procédé selon la revendication 2, dans lequel le résultat de la vérification de l'étape g. est calculé en déterminant la conjonction des mesures $Cr_1$, $Cr_2$ et $Cr_3$.

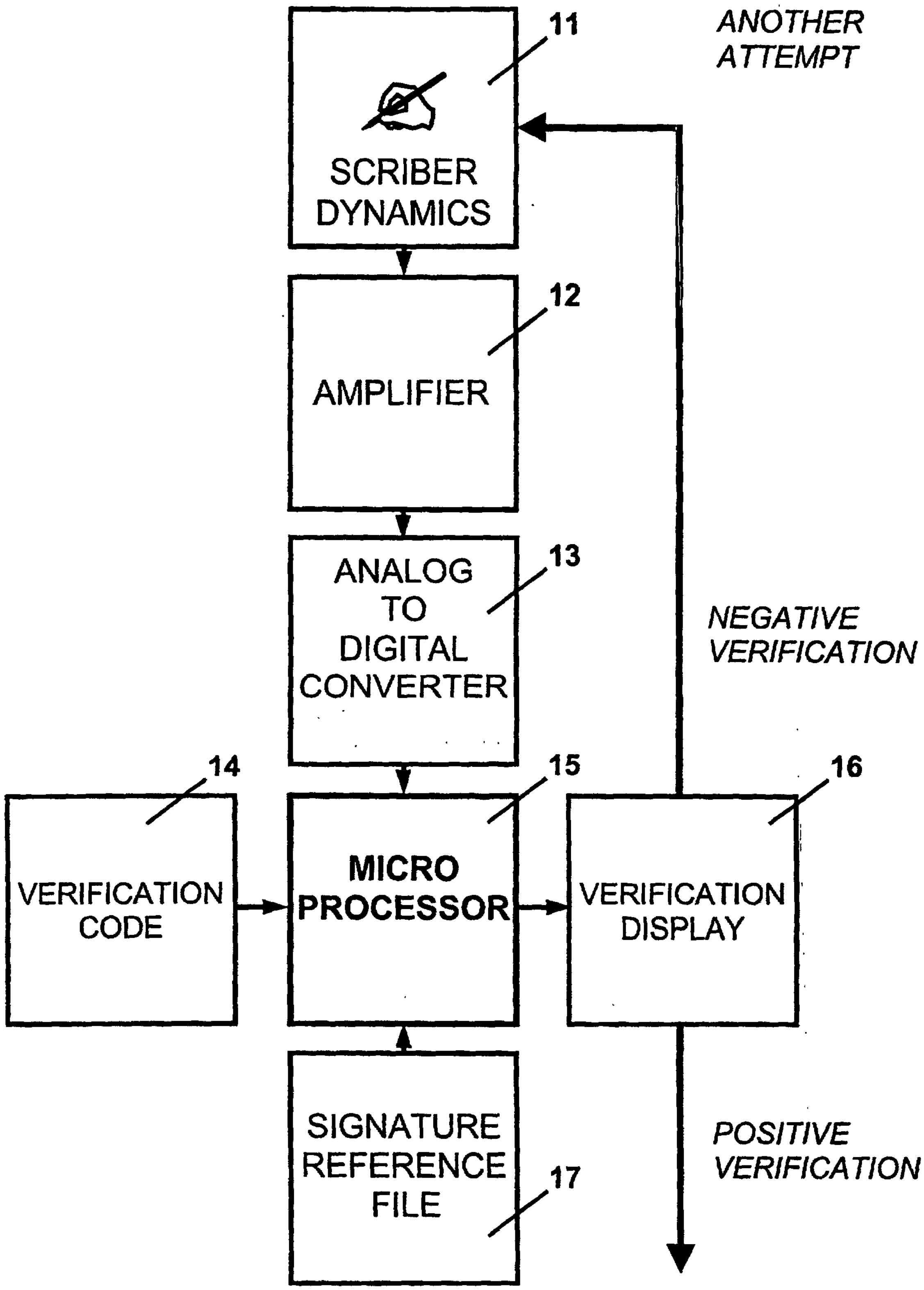
ANOTHER ATTEMPT
11
SCRIBER DYNAMICS
12
AMPLIFIER
13
ANALOG TO DIGITAL CONVERTER
NEGATIVE VERIFICATION
14
VERIFICATION CODE
15
MICRO PROCESSOR
16
VERIFICATION DISPLAY
SIGNATURE REFERENCE FILE
17
POSITIVE VERIFICATION

Fig. 1

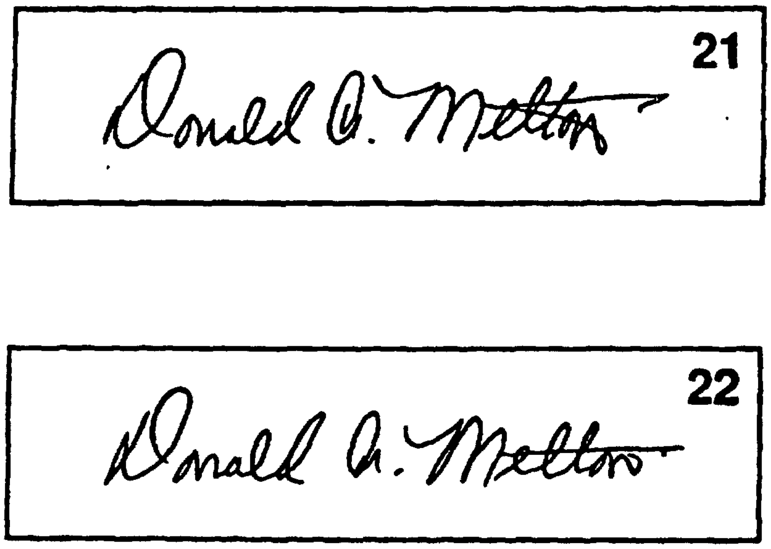


Fig. 2

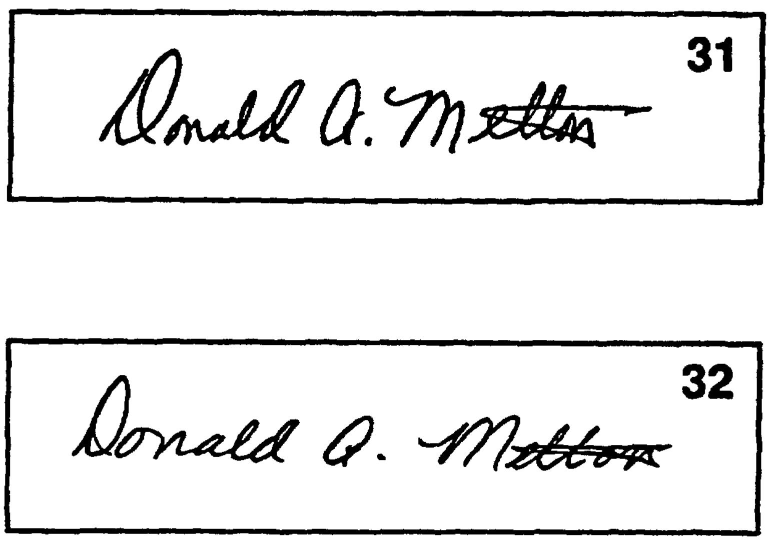


Fig. 3

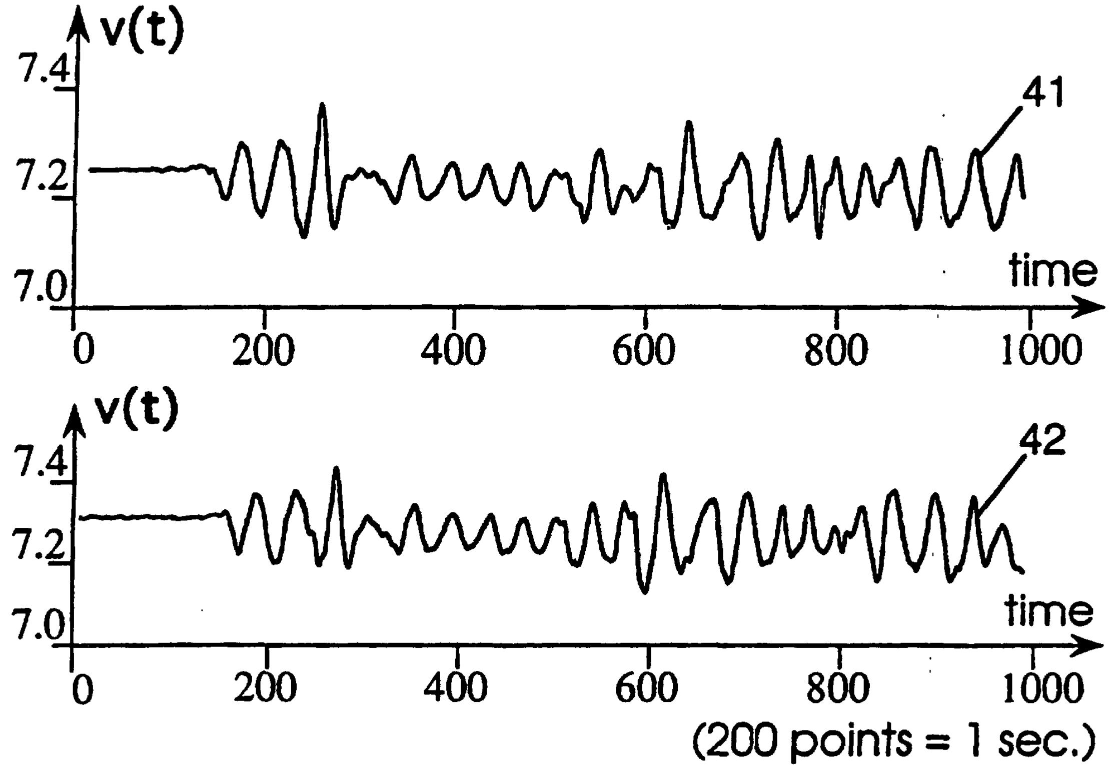
v(t)
7.4
7.2
7.0
41
time
0
200
400
600
800
1000
v(t)
7.4
7.2
7.0
42
time
0
200
400
600
800
1000
(200 points = 1 sec.)

Fig. 4

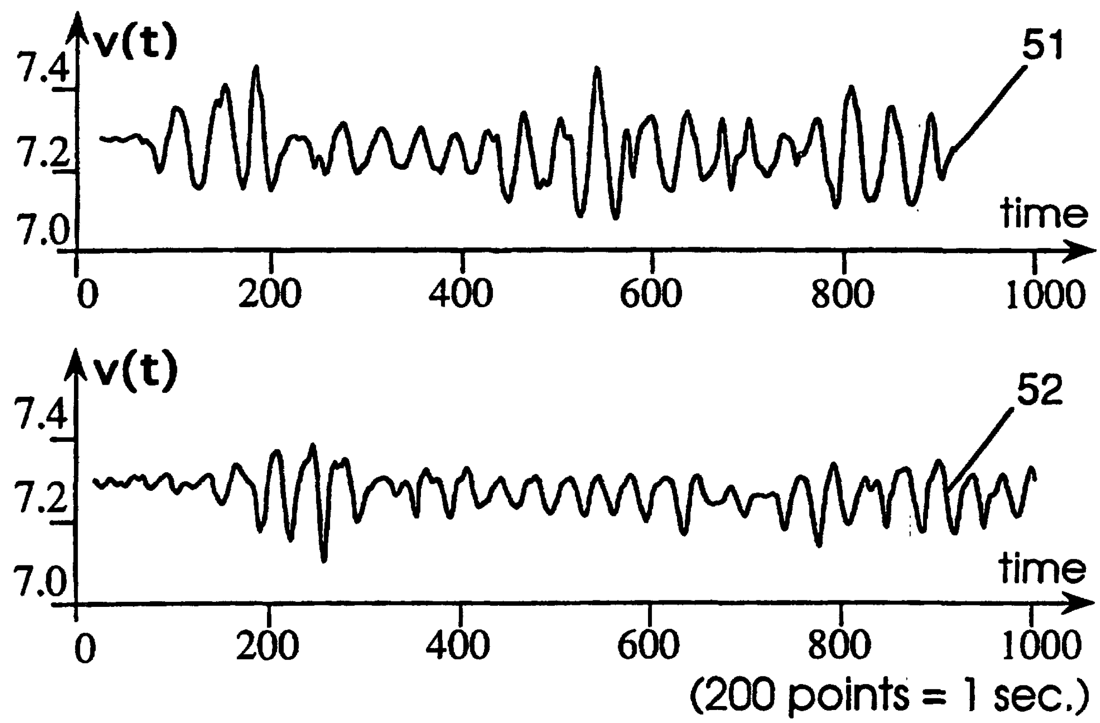
v(t)
7.4
7.2
7.0
51
time
0
200
400
600
800
1000
v(t)
7.4
7.2
7.0
52
time
0
200
400
600
800
1000
(200 points = 1 sec.)

Fig. 5

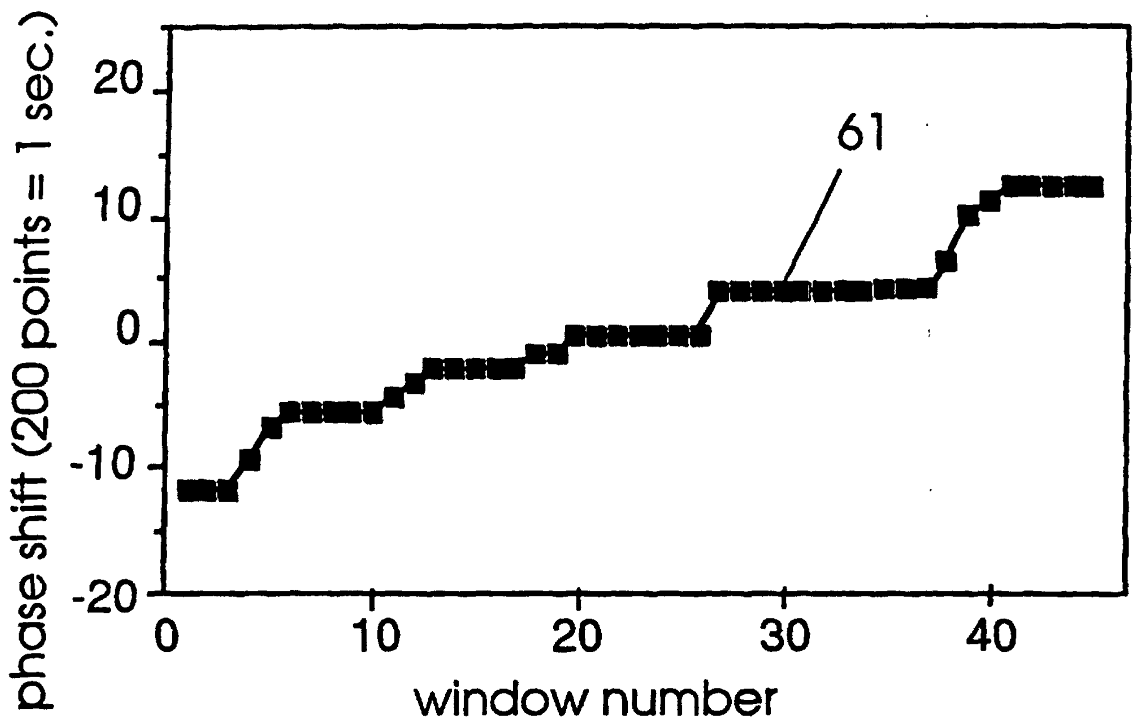

phase shift (200 points = 1 sec.)
20
10
0
-10
-20
0
10
20
30
40
window number
61


Fig. 6a

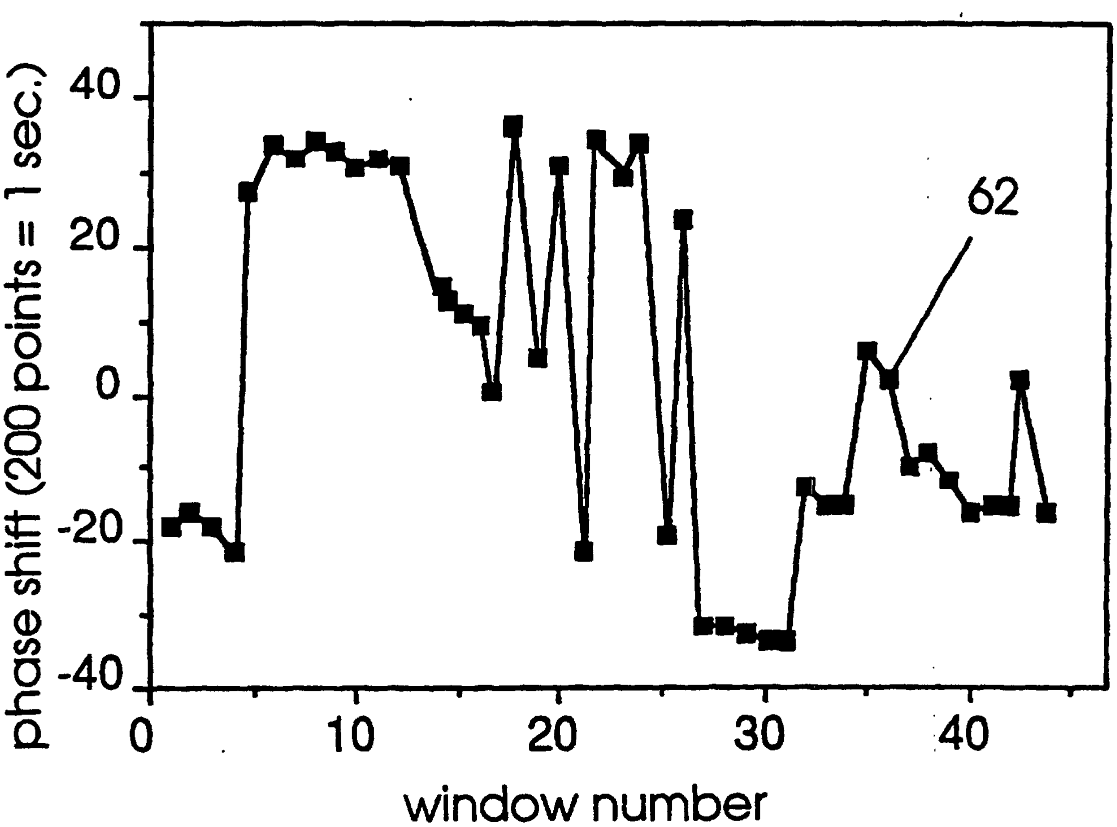

phase shift (200 points = 1 sec.)
40
20
0
-20
-40
0
10
20
30
40
window number
62


Fig. 6b

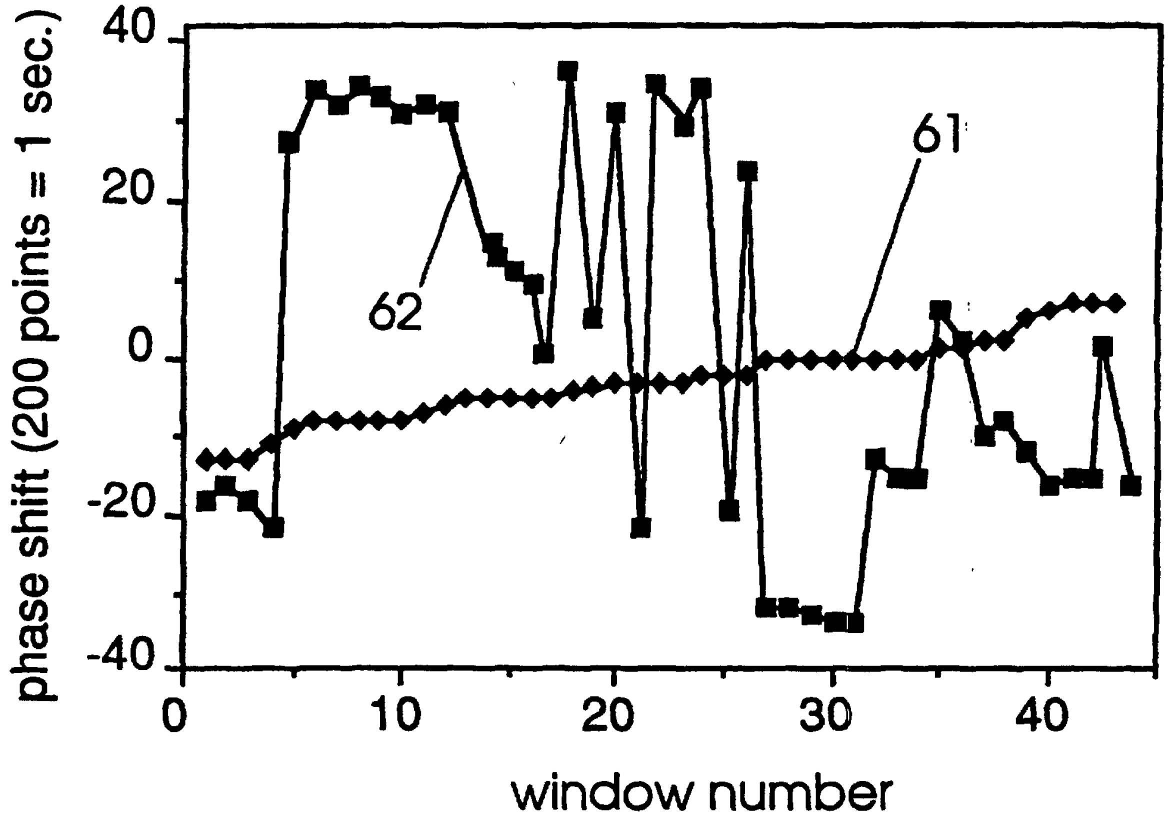

40
20
0
-20
-40
phase shift (200 points = 1 sec.)
0
10
20
30
40
window number
61
62


Fig. 6c

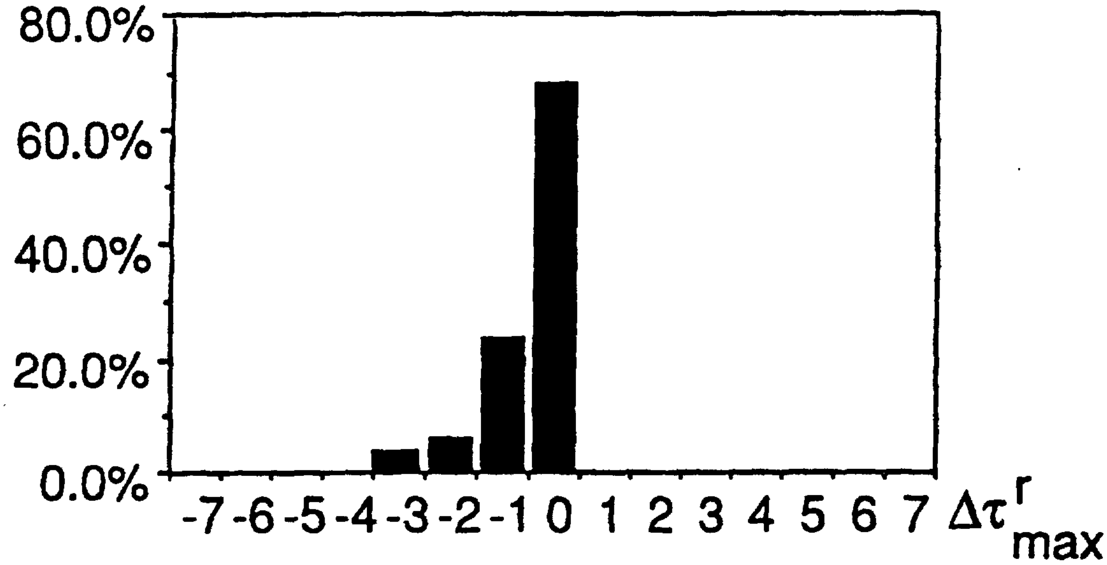
80.0%
60.0%
40.0%
20.0%
0.0%
-7 -6 -5 -4 -3 -2 -1 0 1 2 3 4 5 6 7 $\Delta\tau^r_{max}$

Fig. 7a

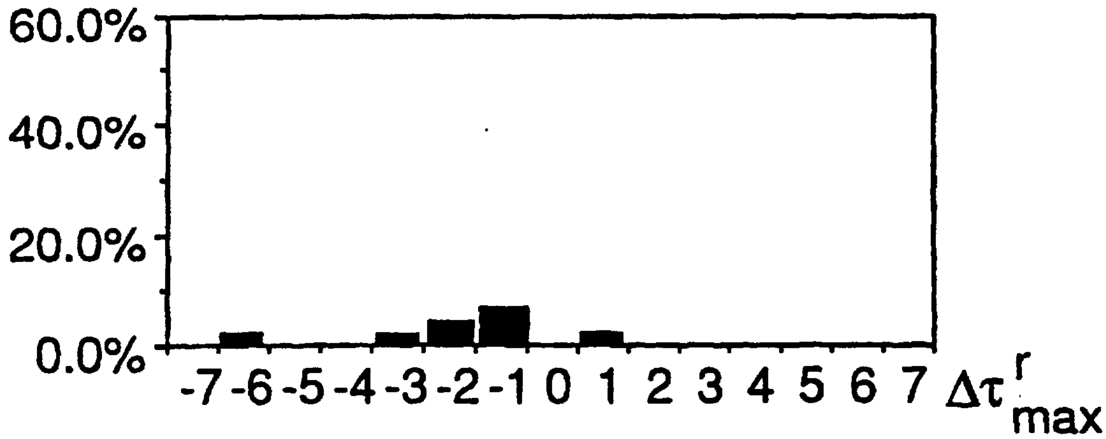
60.0%
40.0%
20.0%
0.0%
-7 -6 -5 -4 -3 -2 -1 0 1 2 3 4 5 6 7 $\Delta\tau^r_{max}$

Fig. 7b

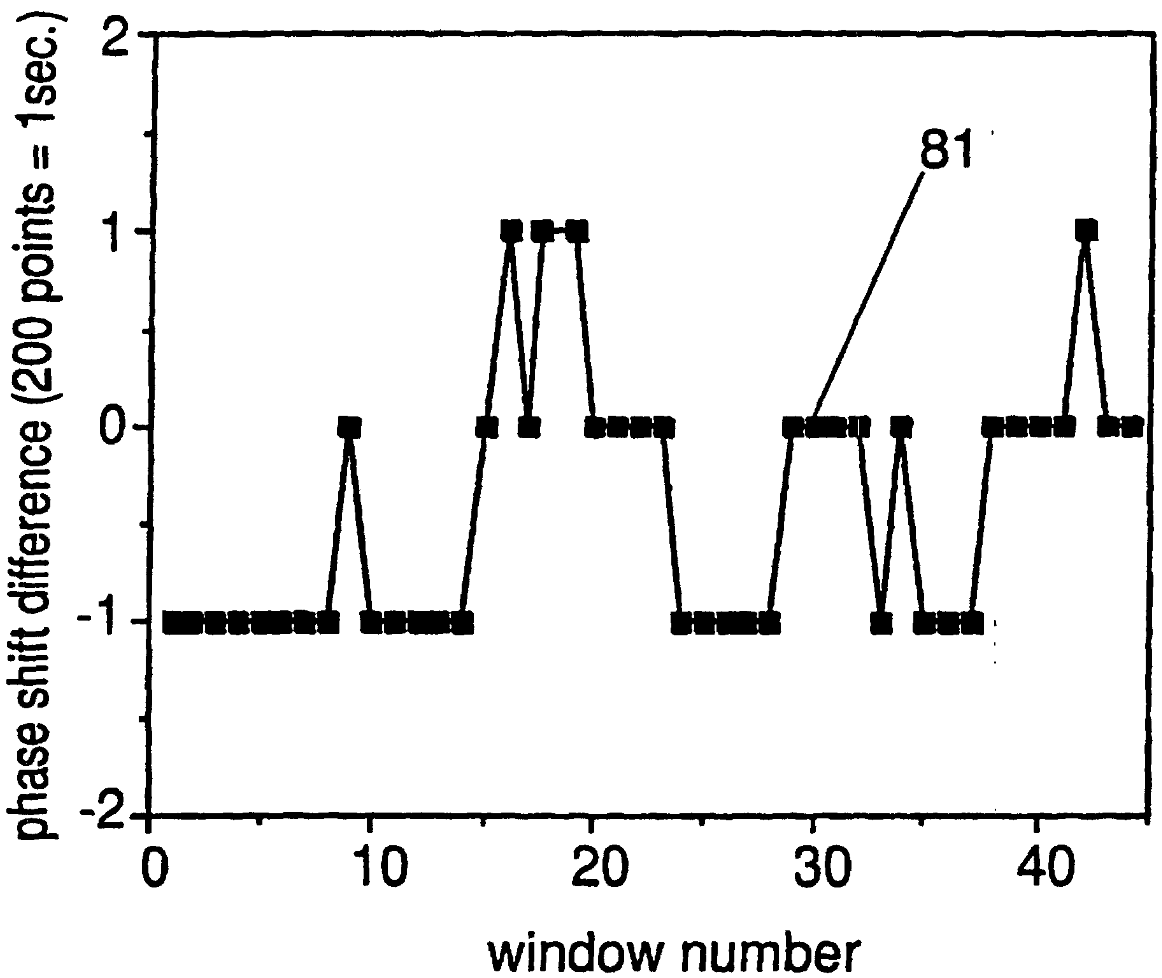
phase shift difference (200 points = 1sec.)
2
1
0
-1
-2
0
10
20
30
40
window number
81

Fig. 8a

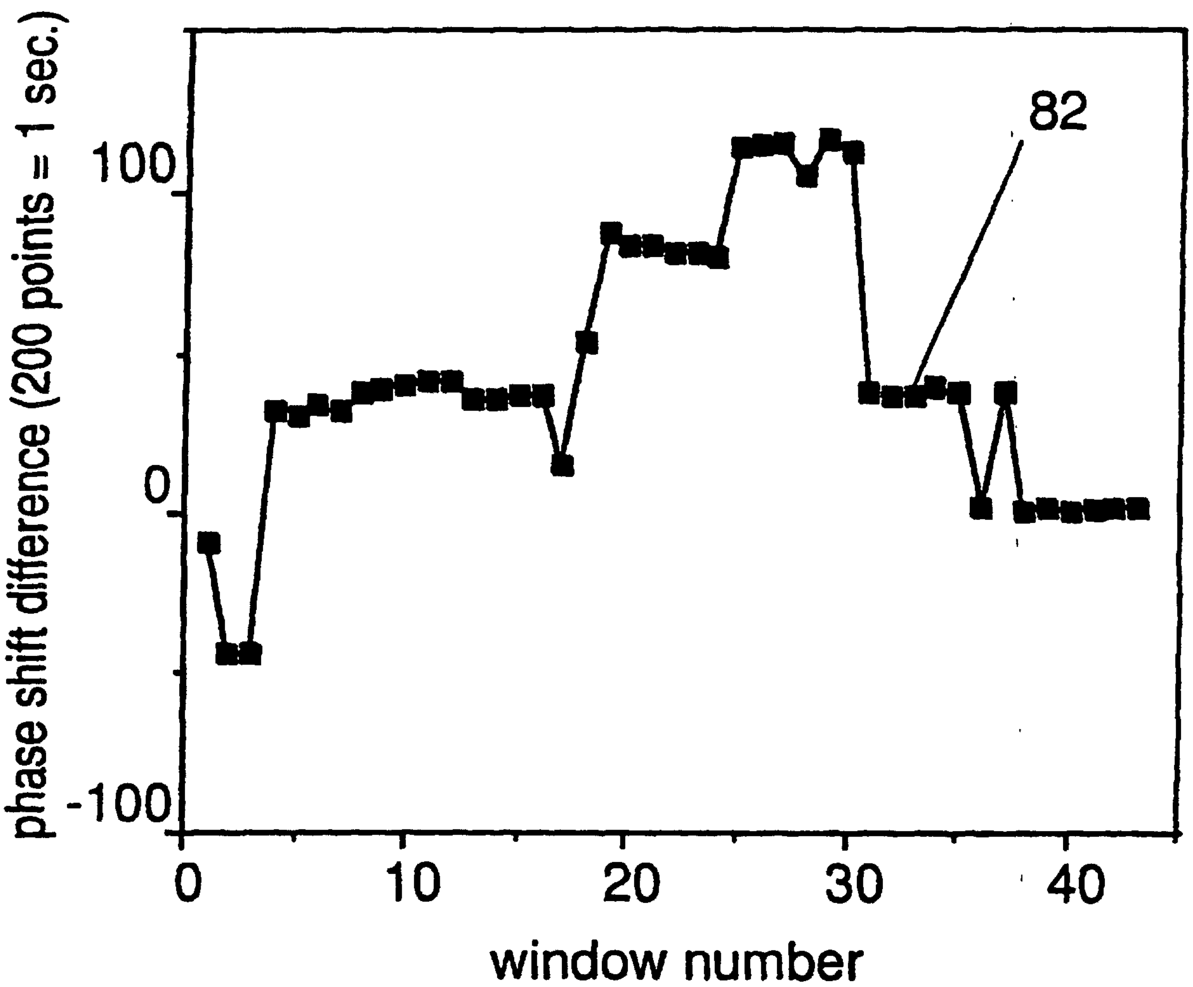
phase shift difference (200 points = 1 sec.)
100
0
-100
0
10
20
30
40
window number
82

Fig. 8b

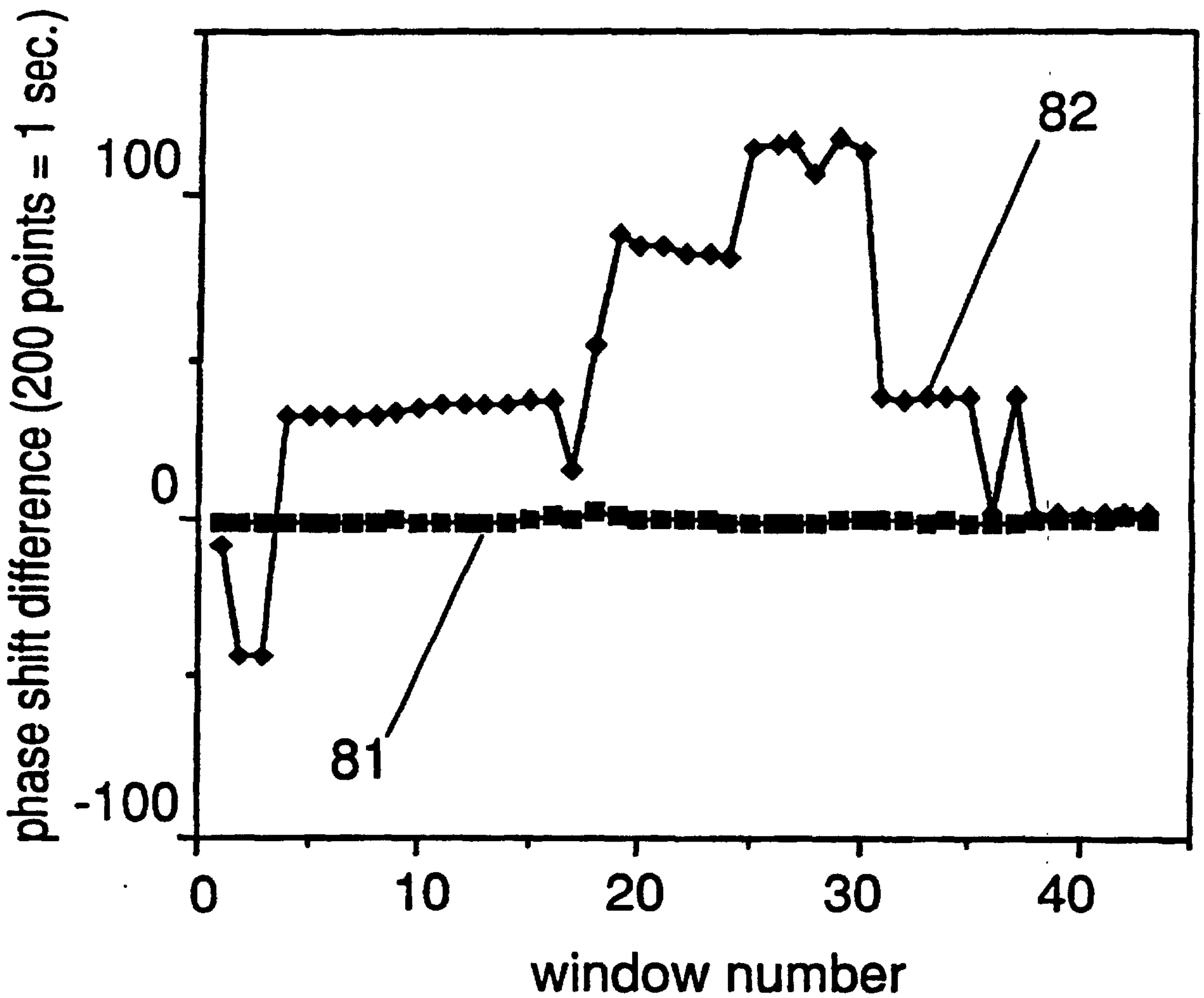
phase shift difference (200 points = 1 sec.)
100
0
-100
0
10
20
30
40
window number
82
81

Fig. 8c

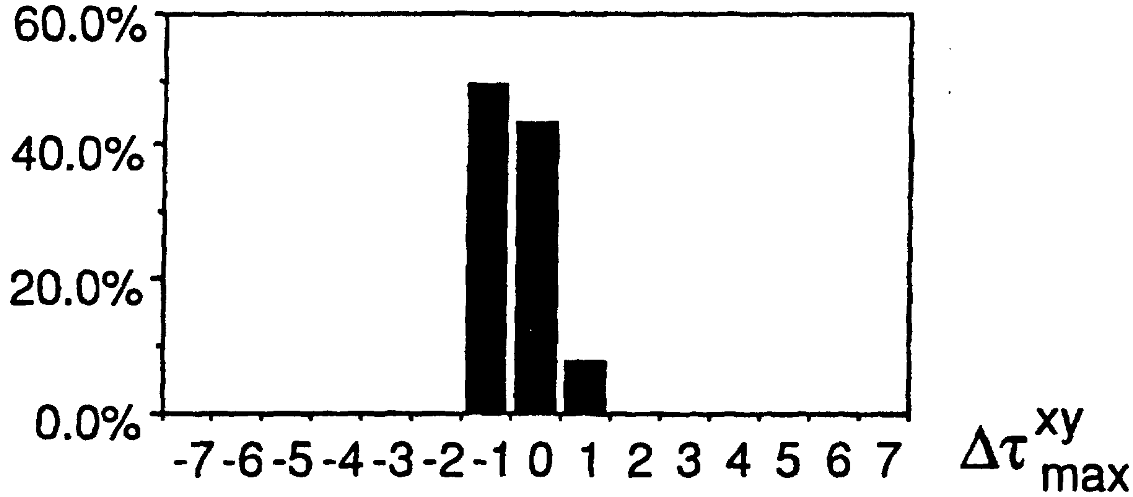
60.0%
40.0%
20.0%
0.0%
-7 -6 -5 -4 -3 -2 -1 0 1 2 3 4 5 6 7
Δτ xy max

Fig. 9a

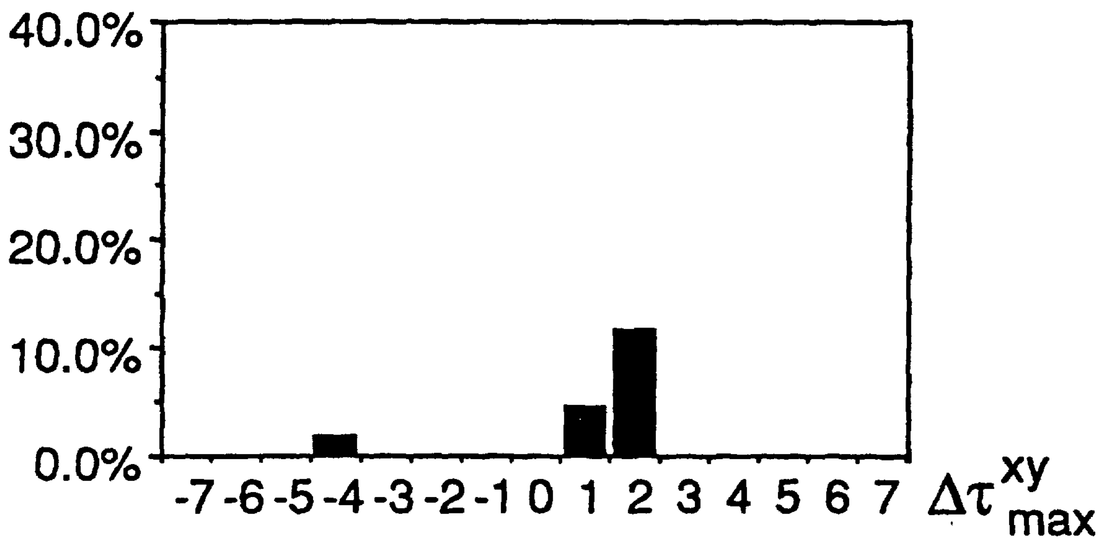
40.0%
30.0%
20.0%
10.0%
0.0%
-7 -6 -5 -4 -3 -2 -1 0 1 2 3 4 5 6 7
Δτ xy max

Fig. 9b

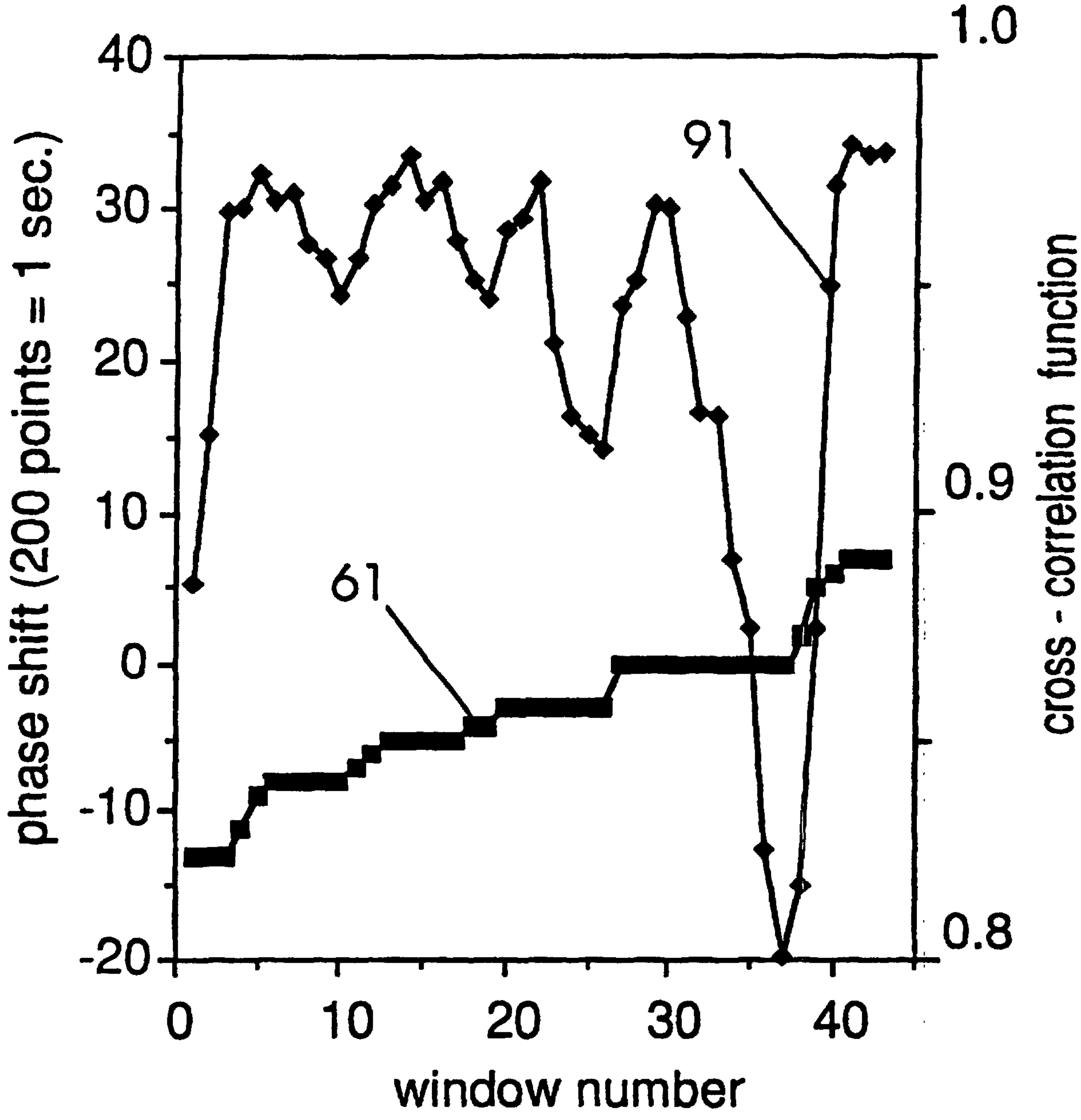

40
30
20
10
0
-10
-20
phase shift (200 points = 1 sec.)
1.0
0.9
0.8
cross - correlation function
91
61
0
10
20
30
40
window number


Fig. 10